# EUROPÄISCHE PATENTSCHRIFT

(11) **EP 1 737 288 B1**
(45) Veröffentlichungstag und Bekanntmachung des Hinweises auf die Patenterteilung: **21.11.2007**
(21) Anmeldenummer: 05740568.0
(22) Anmeldetag: 15.04.2005
(51) Int. Cl.: A01G 13/10, A01G 9/20, A01K 5/01

(54) **WACHSTUMSPLATTFORM FÜR GRÜN, ALS FUTTERGRUNDLAGE FÜR TIERE**
GROWTH PLATFORM FOR GREENERY, DESIGNED FOR USE AS A FEEDING BASE FOR ANIMALS
PLATE-FORME DE CROISSANCE POUR DE LA VERDURE EN TANT QUE BASE D'ALIMENTATION POUR DES ANIMAUX

(30) Priorität: 19.04.2004 DE 202004007514 U; 01.07.2004 DE 202004010397 U; 23.02.2005 DE 202005002889 U
(43) Veröffentlichungstag der Anmeldung: 03.01.2007
(73) Patentinhaber: ENGELNS, Christiane, Schloss Holte-Stukenbrock (DE); GEES, Wolfgang, D-33758 Schloss Holte-Stukenbrock (DE)
(72) Erfinder: GEES, Wolfgang, 33758 Schloss Holte-Stukenbrock (DE)
(86) Internationale Anmeldenummer: PCT/DE2005/000656
(87) Internationale Veröffentlichungsnummer: WO 2005/099437

(56) Entgegenhaltungen:
- CA-A- 2 438 625
- DE-U- 20 201 916

## Beschreibung

Die Erfindung betrifft Wachstumsplattformen für Grün, gemäß dem Oberbegriff des Hauptanspruchs, als Einzelprodukt bzw. auch als integratives also ein bzw. anfügbares Produkt, vgl. z.B. die Druckschriften CA-A-2438625 und DE-U-20201916.

Viele Tiere benötigen Grün (Pflanzen) einerseits als Nahrung (Nager, Reptilien, Vögel, etc) andererseits wie z.B. Katzen um ihren Magen-Darmtrakt von Haaren zu befreien. Herkömmliche auf dem Markt befindliche Produkte, wie z.B. sogenanntes Katzen/bzw. Nagergras wird in Behältnissen angeboten.

In so einem Behältnis ist ein Wachstumsgranulat eingebracht incl. Samen. Das Grün wird unerreichbar für die Tiere unter Hinzufügung von Flüssigkeit zum Wachstum gebracht und dann den Tieren zur Aufnahme hingestellt. Der Nachteil besteht darin, dass z.B. Katzen mit der Aufnahme des Grüns die Wurzeln mit heraus reißen, oder aber auch in dem Granulat wühlen, bzw. ihr Geschäft in das Behältnis machen. Andererseits besteht die Möglichkeit dass z.B. Nager das Behältnis anfressen.

Somit hat der Tierhalter in der Regel nur einen einmaligen Nutzen, eine unhygienische Plattform und als Randerscheinung eine Menge Schmutz

Aufgabe der Erfindung ist es, eine wesentliche bessere Lösung zur Verfugung zu stellen. Die Lösung dieser Aufgabe wird in Verbindung mit den Oberbegriffsmerkmalen erfindungsgemäß durch die Wachstumsplattform gemäß dem Hauptanspruch vermittelt.

Die erfinderische Wachstumsplattform besteht aus einem Grundgefäß zur Aufnahme von Wachstumsstoffen wie z.B.- Erde, Gazen, Watten, Granulate etc, als Aufnahme für diverse Samen (Pflanzen) etc.. die am Weltmarkt befindlich sind. Das erfindungsgemäße Grundgefäß kann aus allen nach dem Stand der Technik zu bekommenen Materialien hergestellt werden.

Um den Tieren bei Aufnahme des Grüns den Zugang zum Wachstumsgranulat zu verwehren, wird erfindungsgemäß über das Grundgefäß ein Deckel gebracht, der in jeder Weise durchlöchert ist, in allen denkbaren Formen (rund, eckig, oval) etc. Auch der erfindungsgemäße Deckel bzw. die Abdeckung kann aus allen nach dem Stand der Technik zu bekommenden Materialien hergestellt werden.

Auch ist daran gedacht, dass die Öffnungen im Deckel /Abdeckung im Durchmesser so groß sind, dass das Grün hindurch wachsen kann, jedoch das Herausreißen des Grüns mit Wurzeln verhindert, wird, weil Pflanzen an der Stelle wo Sie aus dem Granulat (Wachstumsstoff) kommen in der Regel eine Verdickung haben, größer als der eigentliche wachsende Spross, wenn er durch die Löcher hindurch ist.

Somit ist dem Hauptanspruch dieser Erfindung Rechnung getragen, insofern die Tiere das Wachstumsmaterial nicht erreichen können, um darin zu wühlen, ihr Geschäft zu machen etc. Dadurch ist eine Grundlage geschaffen damit Grün ungestört und auch öfter wachsen kann.

Hat nun das Tier aus welchen Gründen auch immer, das Grün abgeweidet (gefressen), so hat das Gesamtprodukt Wachstumsplattform einen weiteren Deckel, der für erneutes ungestörtes Wachstum dann in der Art sorgt; das er über dem Grundgefäß und dem Deckel (Abdeckung) mit den vielen Öffnungen erfindungsgemäß möglicherweise bündig liegt. Dieser weitere Deckel kann aus allen Materialien, in jeder Form und jeder Farbe hergestellt werden nach dem Stand der Technik.

Auch kann dieser Deckel um dem Hauptanspruch gerecht zu werden, als Treibhausdeckel angesehen werden, sodass sich unter diesem Deckel ein Kleinklima entwickelt, sodass Pflanzen, sehr schnell und gut wachsen können. Um die Verhältnisse wie in einem Treibhaus herzustellen, kann dieser obere Deckel mit Öffnungen jeglicher Art versehen sein, um eine Luftzirkulation zu gewährleisten.

Somit ist gesichert, dass die Pflanzen wachsen und nicht durch Stauwärme etc. es zu Fäulnisbildungen kommen kann bzw. zu anderen allen nur denkbaren Vorkommnissen die der Erfindung und dem Zweck im Wege stehen.

Damit erfindungsgemäß die drei Elemente Grundgefäß, gelochte Abdeckung (Deckel) und der Treibhausdeckel in manchen Phasen der Anwendung wie z.B. erneutes Wachstum eine feste Einheit bilden, ist daran gedacht, in einer Ausführungsform z.B. Scharniere oder andere Verriegelungssysteme nach dem Stand der Technik einzubringen bzw. anzubringen.

Somit sind die drei Elemente z.B. in einem einzigen Scharniersystem miteinander vereint. Auf der gegenüberliegenden Seite des Scharniersystems, weisen die drei Teile nach dem Stand der Technik einen Befestigungsabschnitt auf, sodass Tiere den Gesamtkomplex nicht öffnen können.

In einer anderen Ausführungsform sind die Behältnisse ineinander auf Spannung zusammen verbunden.

Alle nach dem Stand der Technik umsetzbaren Lösungen sind einsetzbar, um der technischen Lehre und der erfindungsgemäßen Höhe des Hauptanspruchs gerecht zu werden.

In einer anderen erfindungsgemäßen Ausführungsform kann die Wachstumsplattform auch ein integrativer Bestandteil einer Tierbehausung sein, wie z.B. ein sogenanntes Nagerhaus. Hier ist die Wachstumsplattform auch eine Dachbegrünung und dient so , der grundlegenden Aussage des erfindungsgemäßen Hauptanspruchs, nämlich Futter bereit zu halten, bzw. wie für Katzen zur Magen/Darmreinigung zu dienen.

Die Wachstumsplattform kann in jeder Form und Ausführung erfindungsgemäß in Produkte jeglicher Art ein- bzw. angefügt werden.

### Figur 1.:

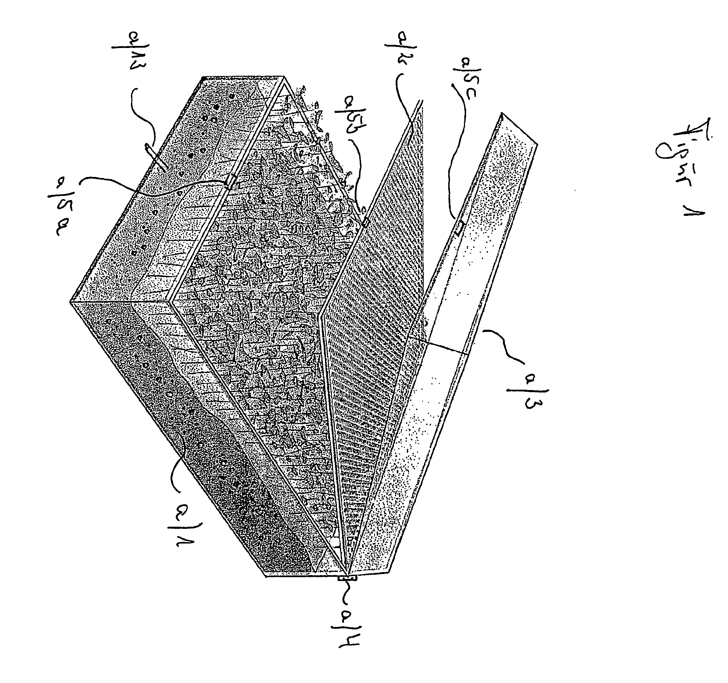

Anhand einer schematisierten Zeichnung, soll eine im Text beschriebene, jedoch nicht erfindungsgemäße, Ausführungsform in Figur 1 dargestellt werden:

(a/1) zeigt das Grundgefäß zur Aufnahme von Grundsubstanzen und Pflanzen( Samen etc). (a/2) zeigt den mittleren auf (a/1) im geschlossenen Zustand liegenden Deckel, der mit Öffnungen versehen ist, die das Wachstum des Grüns gewährleistet, aber nicht das Herausreißen des Grüns incl. Wurzeln beim Verzehr bzw. Aufnahme. (a/3) zeigt den oberen Deckel bzw. Abdeckung , der im geschlossenen Zustand des Gesamtprodukte über (a/2) mit (a/1) verbunden ist, damit das Nachwachsen des Grüns ähnlich wie in einem Treibhaus geschehen kann, ohne dass die Tiere das Wachstum verhindern können.

Hat das Grün die gewünschte Größe erreicht, wird (a/3) hoch gemacht bzw. abgemacht und die Tiere können weiden. (a/3) kann unter anderem gewölbt sein nach oben, bzw. wie ein Zelt oder auch andere denkbare Formen haben. Das Gesamtobjekt ist in der Regel aus Materialien gefertigt, die eine insgesamte Lichtdurchflutung zulassen, bzw. immer so, um den jeweiligen Bedingungen des eingebrachten Grüns Rechnung zu tragen.

(a/4) zeigt in diesem Fall den Bereich der Scharniere (a/5a); (a/5b) und (a/5c) zeigt die feste Verschließbarkeit des Systems, ohne das Tiere diese öffnen können. (a/13) zeigt hier eine Feuchtigkeitsauslaufmöglichkeit in (a/1).

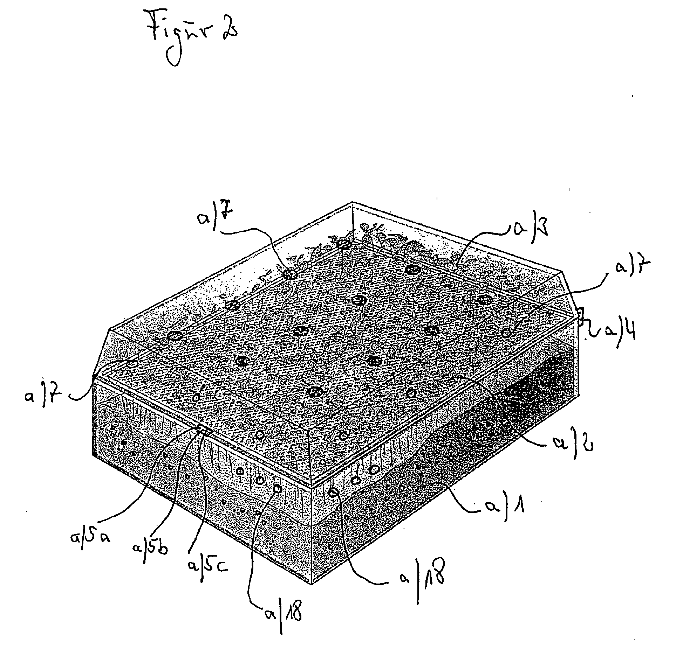

**Eine weitere**, **jedoch nicht erfindungsgemäße, Ausführungsform** wird in Figur 2 dargestellt, wobei die Wachstumsplattform insgesamt für neues Wachstum geschlossen gezeigt wird. Hier ist (a/1), (a/2) und (a/3) durch ein Scharniersystem verbunden. (a/5a) und (a/5b) sowie (a/5c) zeigen die Verriegelung der Wachstumsplattform. (a/7) zeigt hier die Möglichkeit der Belüftung, ähnlich wie bei einem Treibhaus in (a/3).

(a/18) zeigt weitere Belüftungsöffnungen auch im Bereich des Grundgefäßes (a/1). Für die Belüftung kommen alle denkbaren Möglichkeiten nach dem Stand der Technik in Betracht um dem Hauptanspruch dieser Erfindung gerecht zu werden.

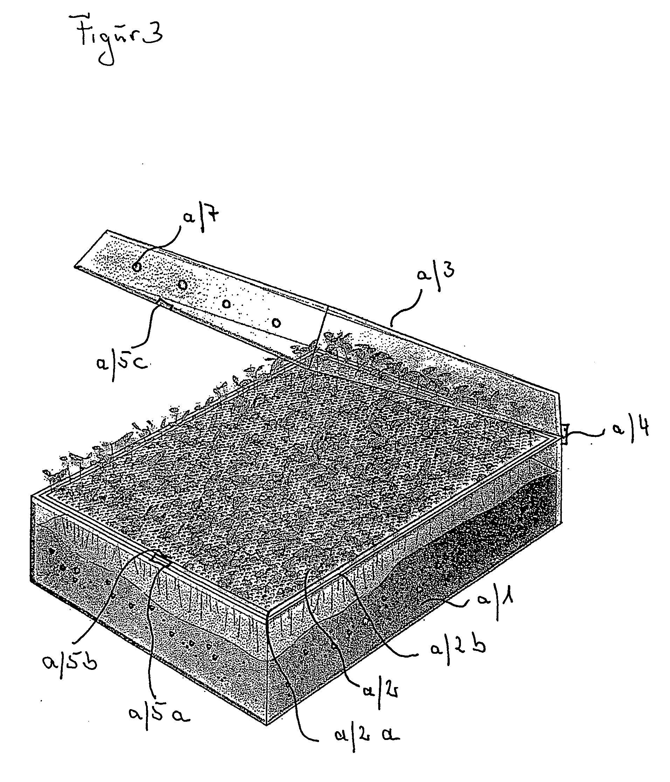

**Eine erfindungsgemäße Ausführungsform** wird in Figur 3 dargestellt.

Figur 3 zeigt, das in einer Ausführungsform (a/2) aus zwei bündig übereinander geführten gelochten Deckeln /Abdeckungen als eine, oder zwei getrennte Einheiten besteht, die in einem gewissen Abstand voneinander bzw. zueinander angeordnet sind. (a/2b) ist der untere dem Granulat (Wachstumsstoff) zugewandte gelochte Deckel mit Öffnungen so groß im Durchmesser, dass der Halm der Pflanze hindurch kann, jedoch nicht so groß um beim Verzehr (Aufnahme) die Wurzeln mit heraus ziehen zu können.

(a/2a) ist in einem Abstand zu (a/2b) bündig angeordnet, sodass (a/2a) auch größere Öffnungen haben kann. In dem Zwischenraum zwischen (a/2b) und (a/2a) ist das Grün von den Tieren nicht erreichbar. Dies hat den Vorteil, dass das einmal durch (a/2b) gewachsene Grün beim Nachwachsen seinen Wachstumsweg bzw.. Richtung beibehält durch (a/2a).

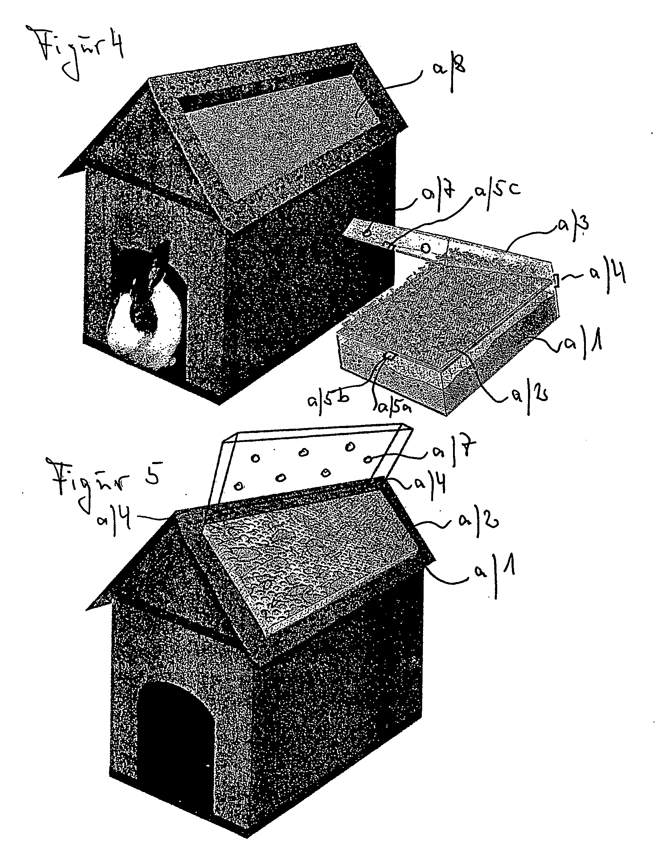

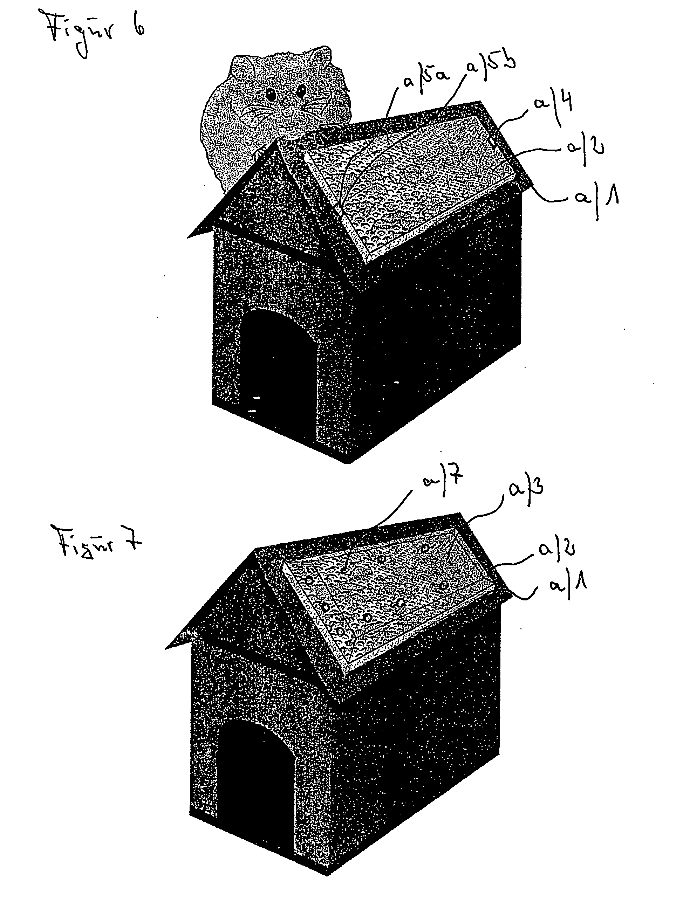

**In einer weiteren beschriebenen Ausführungsform** der Erfindung wird in Figur 4 und 5 die Integration in eine Tierbehausung (hier Nagerhaus) beschrieben:

(a/8) ist die Dachaussparung für die Integration des Gesamtkomplex Wachstumsplattform Die insgesamte Wachstumsplattform (a/1) mit (a/2) und (a/3) kommt in die Aussparung (a/8) des Nagerhauses. Die Wachstumsplattform ist ähnlich wie in Figur 2 konstruiert.

**In Figur 5** ist das Grün gewachsen und der Treibhausdeckel (a/3) wird über (a/4) zurückgeklappt. bzw. abgenommen mangels Platz in einer allgemeinen Tierbehausung. Somit kann das Tier an das Grün kommen.

**In Figur 6** wird erfindungsgemäß dargestellt, wie das Tier weidet. (a/3) der Treibhausdeckel ist in dieser Situation entfernt und (a/1) mit (a/2) schneiden bündig mit der Dachkonstruktion des Nagerhauses bzw. Tierbehausung ab.

**In Figur 7 wird die Ausführung dieser Erfindung** in der Folge dargestellt, insofern als nunmehr (a/3) für erneutes Wachstum über (a/2) bzw. (a/1) bündig gebracht wurde und über beschriebene Scharniersysteme und Befestigungssystem die nach dem Stand der Technik bekannt sind und eine feste nicht von den Tieren zu öffnende Einheit bilden.

**In einer anderen erfindungsgemäßen Ausführungsform** kann jedoch auch (a/3) in (a/1) über (a/2) passgenau eingefügt werden, sodass auf Scharniere und andere Befestigungssysteme verzichtet werden kann.

In dieser Ausführungsform sind dann (a/1) und (a/2), sowie (a/3) wie ein in sich stabiles Stecksystem ineinander und miteinander verbunden, ohne das die Tiere die Wachstumsplattform öffnen können, bzw. ein oder einige Elemente hiervon.

**In einer anderen nicht schematisiert dargestellten Ausführungsform** wird in das Grundgefäß (a/1) eine Einstellpackung (Nachkaufpackung) (a/21) gestellt, welche mit Wachstumsstoffen (Erde, Granulat, etc.) und Samen (Pflanzen) gefüllt ist.

Diese Einstellpackung (Nachkaufpackung) hat am bzw. in seinem Unterboden, Ausbuchtungen Vertiefungen gleich welcher Form, um die Gegenstücke des Grundgefäßes (a/1) aufnehmen zu können. Das Grundgefäß (a/1) hat am bzw. auf dem inneren Boden, fest verankerte über die Länge, oder die Breite, oder die Diagonale bzw. Vertikale Querstreben oder andersförmige Pole, welche genau passen in die Vertiefungen bzw. Ausbuchtungen des Unterbodens der Einstellpackung bzw. Nachkaufpackung (a/21), sodass Fremdverpackungen mit Wachstumsstoffen und Samen bzw. Pflanzen, nicht in das Gesamtprodukt passen. Auch ist daran gedacht, dass die Einstellpackung (Nachkaufpackung) (a/21) aus Materialien gefertigt wird, die bei Kontakt mit Flüssigkeit sich nach einiger Zeit zersetzen. Auch besteht die Möglichkeit in die Einstellpackung (Nachkaufpackung) (a/21) bzw. in das Grundgefäß (a/1) bodenzugewandt ein Fließ einzubringen, welches den Wassertransport bei erneutem aber auch erstem Wachstum zu allen Wurzeln des eingebrachten Grüns übernimmt (Kapillarwirkung, Löschblattprinzip). Des weiteren hat die Einstellpackung (Nachkaufpackung) (a/21) Feuchtigkeitsauslaufmöglichkeiten, ähnlich wie bei dem Grundgefäß (a/1) durch (a/13) gekennzeichnet, zum Schutz gegen Fäulnis und Pilzbefall bzw. Ertrinken des eingebrachte Pflanzgutes.

In einer weiteren Ausführungsform ist daran gedacht, dass der Deckel/Abdeckung (a/2)parallel laufende Stäbe bzw. Leisten hat, die eine Mindestbreite von mindestens 2 cm haben, und nicht in der horizontalen nebeneinander parallel geführt werden, sondern vertikal nebeneinander, sodass Sie mindestens 2 cm in der Höhe erreichen. Granulat-zugewandt ist wie bei einer Ausführung in (a/2) über die gesamte Fläche ein bündig laufender Deckel angebracht, der nur so große Löcher hat, dass das Grün hindurch kann, jedoch nicht die Verdickung dort wo das Grün das Wachstumsgranulat verlässt. Somit wird verhindern dass die Tiere das Grün mit Wurzeln heraus ziehen können, bzw. zu tief abfressen, was neues Wachstum verhindern würde. Auch ist daran gedacht an dem Grundgefäß (a/1) Halterungen gleich welcher Art zu platzieren, damit der Tierhalter zusätzlich Nagersteine, Mineralsteine , und auch rund herum Hölzer zum Nagen anbringen kann, hier ähnlich wie ein Palisadenzaun. Es kommt auch in Betracht, dass das Grundgefäß (a/1) bzw. der Treibhausdeckel (a/3) von einer Konstruktion umgeben ist z.B. aus Draht oder anderen Materialien, damit Nager mit sehr starken Zähnen die insgesamte Wachstumsplattform nicht zerstören können.

## Patentansprüche

1. Wachstumsplattform mit der Möglichkeit der Aufnahme von Wachstumsstoffen, z.B. Erde, Granulat, Samen, Wasser etc., als Grundlage für das Wachstum von Grünpflanzen wobei über das Grundgefäß (a/1) der Wachstumsplattform eine zusätzliche Abdeckung (a/2) kommt,
**dadurch gekennzeichnet,**
**dass** die zusätzliche Abdeckung (a/2) zwei bündig übereinander geführte und gelochte Deckel hat, nämlich ein erster Deckel (a/2b) und ein zweiter Deckel (a/2a), wobei der erste Deckel (a/2b) nur so große Öffnungen hat, dass das Grün hindurch kann und der zweite Deckel (a/2a), da er in einem Abstand zu dem ersten Deckel (a/2b) ausgeführt ist, verhindert, dass die Tiere das Grün zu tief abfressen können, so dass die Wuchsrichtung des Grüns durch den ersten Deckel (a/2b) in Richtung des zweiten Deckels (a/2a) vorgegeben bleibt.

2. Wachstumsplattform nach Anspruch 1,
**dadurch gekennzeichnet,**
**dass** ein weiterer Deckel (Abdeckung) (a/3) aufgebracht werden kann, um einen Treibhauseffekt bei erneutem Wachstum des Grüns zu gewährleisten, ohne das die Tiere das Wachstum stören können.

3. Wachstumsplattform nach Anspruch 1 bis 2
**dadurch gekennzeichnet,**
**dass** eine zusätzliche Abdeckung (a/2) auch Drahtgeflechte sein können.

4. Wachstumsplattform nach Anspruch 1 bis 2
**dadurch gekennzeichnet,**
**dass** die Abdeckung (a/2) parallel laufende Leisten hat, bzw. Stäbe die eine Breite von mindestens 2 cm haben und nicht in der horizontalen nebeneinander parallel geführt werden, sondern vertikal nebeneinander angeordnet sind, sodass Sie mindestens 2 cm in der Höhe erreichen.
Unter diesen parallel geführten Leisten bzw. Stäben ist Granulat-zugewandt, ein Deckel angebracht über die gesamte Fläche, wie in (a/2) beschrieben der so große Löcher hat, das das wachsende Grün hindurch kann, jedoch nicht die Verdickung an der Stelle, wo das Grün die Wachstumsstoffe verlässt. Somit wird verhindert dass die Tiere das Grün mit Wurzeln heraus ziehen können, bzw. zu tief abfressen, was neues Wachstum verhindern würde.

5. Wachstumsplattform nach Anspruch 1 bis 2,
**dadurch gekennzeichnet,**
**dass** das Grundgefäß (a/1) die mittlere Abdeckung (a/2) und der sogenannte sich darüber befindliche Treibhausdeckel (a/3) mit Öffnungen versehen werden, nach dem Stand der Technik, um einen Luftaustausch des Gesamtproduktes (Zirkulation zu gewährleisten.

6. Wachstumsplattform nach einem der vorgenannten Ansprüche,
**dadurch gekennzeichnet**
**dass** die Wachstumsplattform ein integraler Bestandteil eines Nagerhauses sein kann.

7. Wachstumsplattform nach einem der vorgenannten Ansprüche,
**dadurch gekennzeichnet,**
**dass** die Wachstumsplattform in jeder Form und Ausführung, sowie Materialbeschaffenheit erfindungsgemäß in Produkte jeglicher Art ein- bzw. angefügt werden kann.

8. Wachstumsplattform nach einem der vorgenannten Ansprüche,
**dadurch gekennzeichnet,**
**dass** die Wachstumsplattform in seinen Bestandteilen Grundgefäß (a/1) und Abdeckung (a/2) und Treibhausdeckel (a/3) durch Scharniere (a/4) gehalten werden und über Verriegelung (a/5a), Verriegelung (a/5b) und Verriegelung (a/5c) eine geschlossene Einheit darstellen.

9. Wachstumsplattform nach einem der vorgenannten Ansprüche,
**dadurch gekennzeichnet,**
**dass** sogenannte nach dem Stand der Technik angebotene Möbelbänder als Scharniere genommen werden, um im Bedarfsfall die Abdeckung (a/2) bzw. den Treibhausdeckel (a/3) abnehmen zu können, von dem Grundgefäß (a/1) ohne das Gesamtobjekt anders positionieren zu müssen.

10. Wachstumsplattform nach einem der vorgenannten Ansprüche,
**dadurch gekennzeichnet,**
**dass** das Grundgefäß (a/1), die Abdeckung (a/2) und der Treibhausdeckel (a/3) wie ein Stecksystem miteinander und ineinander verbunden werden können, als feste Einheit, ohne das die Tiere das Gesamtobjekt öffnen können, bzw. einzelne ineinander und miteinander verbundene Teile, wie z.B. Grundgefäß (a/1) mit Abdeckung (a/2).

11. Wachstumsplattform nach einem der vorgenannten Ansprüche,
**dadurch gekennzeichnet,**
**dass** das Grundgefäß (a/1) eine Feuchtigkeitsauslaufmöglichkeit (a/13) besitzt für überschüssige Feuchtigkeit.

12. Wachstumsplattform nach einem der vorgenannten Ansprüche,
**dadurch gekennzeichnet,**
**dass**in das Grundgefäß (a/1) eine Einstellpackung (Nachkaufpackung) (a/21) gestellt werden kann, welche mit Wachstumsstoffen (Erde, Granulat, etc) und Samen (Pflanzen) gefüllt ist.

13. Wachstumsplattform nach Anspruch 12,
**dadurch gekennzeichnet,**
**dass** die Einstellpackung (Nachkaufpackung) (a/21) Ausbuchtungen, Vertiefungen etc. im Unterboden, gleich welcher Form und Ausführung hat, um die Gegenstücke des Grundgefäßes (a/1) passgenau aufnehmen zu können.

14. Wachstumsplattform nach Anspruch 12 bis 13,
**dadurch gekennzeichnet,**
**dass** das Grundgefäß (a/1) am bzw. auf dem inneren Boden, fest verankerte über die Länge, oder die Breite, oder die Diagonale bzw. Vertikale Querstreben oder andersförmige Pole hat, welche genau passen, in die Vertiefungen bzw. Ausbuchtungen des Unterbodens der Einstellpackung (Nachkaufpackung) (a/21) sodass Fremdverpackungen mit Wachstumsstoffen und Samen (Pflanzen) nicht in das Gesamtprodukt passen.

15. Wachstumsplattform nach Anspruch 12 bis 14,
**dadurch gekennzeichnet,**
**dass** die Einstellpackung (Nachkaufpackung) (a/21) aus Materialien hergestellt werden, die mit Wasser in Verbindung kommend, sich nach einiger Zeit zersetzen.

16. Wachstumsplattform nach Anspruch 12 bis 15,
**dadurch gekennzeichnet,**
**dass** in die Einstellpackung (Nachkaufpackung) (a/21), oder in das Grundgefäß (a/1) Boden zugewandt ein Fließ eingebracht wird, welches den Wassertransport bei erneutem Wachstum bzw. erstmaligen Wachstum zu allen Wurzeln übernimmt (Kapillarwirkung, Löschblattprinzip).

17. Wachstumsplattform nach Anspruch 12 bis 16,
**dadurch gekennzeichnet,**
**dass** die Einstellpackung (Nachkaufpackung) (a/21) Feuchtigkeitsauslaufmöglichkeiten besitz, ähnlich wie bei dem Grundgefäß (a/1) durch (a/13) **gekennzeichnet**, zum Schutz gegen Fäulnis und Pilzbefall bzw. Ertrinken des eingebrachten Pflanzgutes.

18. Wachstumsplattform nach einem der vorgenannten Ansprüche,
**dadurch gekennzeichnet,**
**dass** das Grundgefäß (a/1) Halterungen besitzt, wo der Tierhalter Nagerstein, Mineralsteine etc. fest legen kann.

19. Wachstumsplattform nach einem der vorgenannten Ansprüche,
**dadurch gekennzeichnet,**
**dass** das Grundgefäß (a/1) Halterungen hat, rund um das Grundgefäß, um Holzmaterialien fest machen zu können, ähnlich wie bei einem Palisadenzaun, damit die Tiere ihrem Nagebedürfnis nachgehen können.

20. Wachstumsplattform nach einem der vorgenannten Ansprüche ,
**dadurch gekennzeichnet,**
**dass** das Grundgefäß (a/1) und der Treibhausdeckel (a/3) von einem Drahtmantel umgeben sein kann, damit das Grundgefäß (a/1) und der Treibhausdeckel (a/3) nicht von den Tieren beschädigt werden kann.

## Claims

1. Growing platform with the potential to receive growing media, for example: soil, granules, seeds; water etc. as a basis for the growth of foliage plants whereas an additional cover (a/2) is placed atop the base (a/1).
**Characterized by** the fact that the additional covering (a/2) consists of two perforated covers which sit flush on top of each other, particularly a first cover (a/2b) and a second cover (a/2a), whereas the size of the openings in the first cover (a/2b) allows the greenery to grow through and the second cover (a/2a) prevents animals from cropping the greenery too deeply as it is set to leave a gap to the first cover, therefore the upward growth of the greenery remains predetermined by the first cover (a/2b) towards the second cover (a/2a).

2. The growing platform as claimed in claim 1, **characterized in that**
a further cover (covering) (a/3) can be applied in order to ensure a greenhouse effect in conjunction with renewed growth of the green matter, but without the animals being able to disturb the growth.

3. The growing platform as claimed in claim 1 to 2, **characterized in that**
an additional covering (a/2) can also be in the form of a wire mesh.

4. The growing platform as claimed in claim 1 to 2, **characterized in that**
the covering (a/2) has strips or bars oriented in parallel, which possess a width of at least 2 cm and do not run parallel adjacent to one another in the horizontal sense, but are arranged vertically adjacent to one another, so that they achieve a height of at least 2 cm.
Applied under these parallel-oriented strips or bars, and facing towards the granulate, is a cover over the entire surface, as described in (a/2), which contains holes that are sufficiently large to permit the passage of the green matter as it grows, but not the thickening at the point where the green matter leaves the granulate. The animals are prevented in this way from pulling out the green matter complete with its roots, or from eating it too far down, which would prevent regrowth.

5. The growing platform as claimed in claim 1 to 2,
**characterized in that**
the basic container (a/1), the middle covering (a/2) and the so-called superjacent greenhouse cover (a/3) are provided with openings according to the prior art in order to ensure an exchange of air (circulation) for the entire product.

6. The growing platform as claimed in one of the preceding claims,
**characterized in that**
the growing platform can be an integral part of a rodent house.

7. The growing platform as claimed in one of the preceding claims,
**characterized in that**
the growing platform, in whatever form and execution, and whatever the nature of its material, can be incorporated in or annexed to products of all kinds according to the invention.

8. The growing platform as claimed in one of the preceding claims,
**characterized in that**
the growing platform is held to its component parts consisting of the basic container (a/1) and covering (a/2) and greenhouse cover (a/3) by hinges (a/4) and constitutes a closed unit via the locking means (a/5a), the locking means (a/5b) and the locking means (a/5c).

9. The growing platform as claimed in one of the preceding claims,
**characterized in that**
so-called furniture straps according to the prior art are offered and are utilized as hinges, to enable the covering (a/2) and/or the greenhouse cover (a/3) to be removed from the basic container (a/1), should the occasion arise, without being obliged to position the entire object differently.

10. The growing platform as claimed in one of the preceding claims,
**characterized in that**
the basic container (a/1), the covering (a/2) and the greenhouse cover (a/3) are capable of being connected to one another and inside one another as a plug-in system, as a stable unit, without the animals being able to open the entire object or individual parts that are connected inside one another and to one another, such as the basic container (a/1) with the covering (a/2).

11. The growing platform as claimed in one of the preceding claims,
**characterized in that**
the basic container (a/1) possesses a moisture outlet facility (a/13) for excess moisture.

12. The growing platform as claimed in one of the preceding claims,
**characterized in that**
a refill pack (repeat purchase pack) (a/21) can be placed in the basic container (a/1), which pack is filled with growing substances (soil, granulates, etc.) and seeds (plants).

13. The growing platform as claimed in claim 12,
**characterized in that**
the refill pack (repeat purchase pack) (a/21) in its base has protrusions, recesses, etc., of whatever form and execution, to enable the corresponding parts of the basic container (a/1) to be accommodated with a perfect fit.

14. The growing platform as claimed in claims 12 to 13,
**characterized in that**
the basic container (a/1) at or on its inner base has transverse struts or poles of some other form, securely anchored over the length, or the width, or the diagonal or the vertical, which fit perfectly into the recesses or protrusions of the base of the refill pack or the repeat purchase pack (a/21), so that non-standard packs of growing substances and seeds (plants) will not fit into the overall product.

15. The growing platform as claimed in claims 12 to 14,
**characterized in that**
the refill pack (repeat purchase pack) (a/21) is manufactured from materials which decompose after a certain period in contact with water.

16. The growing platform as claimed in claims 12 to 15,
**characterized in that**
a fleece, facing towards the base, is introduced into the refill pack (repeat purchase pack) (a/21) or into the basic container (a/1), which fleece assumes the task of water transport in the event of renewed growth, or also initial growth, to all the roots (capillary effect, blotting paper principle).

17. The growing platform as claimed in claims 12 to 16, **characterized in that**
the refill pack (repeat purchase pack) (a/21) includes moisture outlet facilities, similar to the basic container (a/1) and designated as (a/13), in order to protect against rot and mold attack or saturation of the introduced plant material.

18. The growing platform as claimed in one of the preceding claims,
**characterized in that**
the basic container (a/1) possesses holders, where the animal owner can attach rodent stones, mineral stones etc.

19. The growing platform as claimed in one of the preceding claims,
**characterized in that**
the basic container (a/1) possesses holders, all round the basic container, to permit the attachment of wood materials, similar to a palisade fence, to enable animals to satisfy their need to gnaw.

20. The growing platform as claimed in one of the preceding claims,
**characterized in that**
the basic container (a/1) and the greenhouse cover (a/3) are enclosed in a wire jacket to prevent the animals from being able to damage the basic container (a/1) and the greenhouse cover (a/3).

## Revendications

1. Jardinière avec possibilité d'y mettre des substances de croissance par exemple de la terre, des granulés, des graines de semence, de l'eau etc.. comme base pour y faire pousser des plantes, le bac de fond (a/1) de la jardinière étant recouvert d'un couvercle supplémentaire (a/2),
qui est **caractérisée par le fait**
**que** le couvercle supplémentaire (a/2) est composé de deux couvercles reliés l'un à l'autre et perforés, à savoir un premier couvercle (a/2b) et un deuxième couvercle (a/2a), le premier couvercle (a/2b) ayant des ouvertures suffisamment grandes pour que les plantes puissent pousser au-travers et le deuxième couvercle (a/2a), étant donné qu'il est disposé à un certain écart par rapport au premier couvercle (a/2b), empêche que les animaux ne puissent brouter les plantes trop profondément, ce qui permet aux plantes de pousser à travers le premier couvercle (a/2b) en direction du deuxième couvercle (a/2a)

2. Jardinière selon revendication 1,
**caractérisée par le fait**
**qu'**un autre couvercle (a/3) peut être disposé pour obtenir un effet de serre lors d'une nouvelle croissance des plantes sans que les animaux ne puissent en gêner la pousse.

3. Jardinière selon revendication 1 à 2
**caractérisée par le fait**
**qu'**un couvercle supplémentaire (a/2) peut aussi être un treillis de fils métalliques.

4. Jardinière selon revendication 1 à 2
**caractérisée par le fait**
**que** le couvercle (a/2) possède des barres disposées parallèlement ou des tiges d'une épaisseur d'au moins 2 cm et qui ne sont pas disposées parallèlement les unes à côté des autres mais disposées verticalement pour qu'elles aient au moins 2 cm de haut.
Au-dessous de ces barres ou tiges disposées parallèlement, on a placé en direction des granulés un couvercle recouvrant toute la surface, comme décrit sous (a/2), qui possède des trous d'une grosseur telle que les plantes peuvent pousser à travers mais qui n'a pas l'épaisseur de la tige des plantes à l'endroit où elles quittent les substances de croissance. On évite ainsi que les animaux arrachent les plantes avec les racines ou qu'ils broutent trop profondément, ce qui empêcherait une nouvelle pousse.

5. Jardinière selon revendication 1 à 2,
**caractérisée par le fait**
**que** le bac de fond (a/1), le couvercle du milieu (a/2) et le couvercle dit de serre (a/3), qui se trouve au-dessus, sont perforés selon l'art de la technique, afin de garantir un échange d'air de l'ensemble du produit (circulation).

6. Jardinière selon l'une des revendications citées ci-dessus,
**caractérisée par le fait**
**que** la jardinière peut être un élément intégral d'une hutte de rongeur.

7. Jardinière selon l'une des revendications citées ci-dessus,
**caractérisée par le fait**
**que** la jardinière, quelle que soit sa forme et sa version et quelle que soit la nature du matériau, peut être ajoutée à des produits de toutes sortes, selon l'invention.

8. Jardinière selon l'une des revendications citées ci-dessus,
**caractérisée par le fait**
**que** la jardinière et ses éléments : bac de fond (a/1), couvercle (a/2) et couvercle de serre (a/3) sont retenus par des charnières (a/4) et forment une unité fermée par le verrouillage (a/5a), le verrouillage (a/5b) et le verrouillage (a/5c).

9. Jardinière selon l'une des revendications citées ci-dessus,
**caractérisée par le fait**
**que** lesdites paumelles, livrées selon l'art de la technique, peuvent être utilisées comme charnières pour, en cas de besoin, pouvoir retirer le couvercle (a/2) et/ou le couvercle serre (a/3), du bac de fond (a/1) sans devoir replacer l'ensemble de l'objet.

10. Jardinière selon l'une des revendications citées ci-dessus,
**caractérisée par le fait**
**que** le bac de fond (a/1), le couvercle (a/2) et le couvercle de serre (a/3) peuvent être emboîtés les uns avec et dans les autres, pour former une unité, sans que les animaux puissent ouvrir l'ensemble de l'objet ou les parties emboîtées les unes avec et dans les autres comme par exemple le bac de fond (a/1) avec le couvercle (a/2).

11. Jardinière selon l'une des revendications citées ci-dessus,
**caractérisée par le fait**
**que** le bac de fond (a/1) possède un système d'évacuation de l'humidité (a/13) pour le trop-plein d'humidité.

12. Jardinière selon l'une des revendications citées ci-dessus,
**caractérisée par le fait**
**que**, dans le bac de fond (a/1), on peut placer un paquet supplémentaire (paquet de remplacement) (a/21), qui est rempli de substances de croissance (terre, granulés etc..) et de graines de semence (plantes).

13. Jardinière selon revendication 12,
**caractérisée par le fait**
**que** le fond du paquet supplémentaire (paquet de remplacement) (a/21) possède des renflements, des creux etc., quelle que soit leur forme et version, afin de pouvoir s'adapter exactement aux formes opposées du bac de fond (a/1).

14. Jardinière selon les revendications 12 à 13,
**caractérisée par le fait**
**que** le bac de fond (a/1) possède sur ou au fond intérieur, des contrefiches fixes, disposées sur la longueur, ou la largeur ou en diagonale ou à la verticale, ou bien possède d'autres pôles, qui s'adaptent exactement aux renflements et aux creux du fond du paquet supplémentaire (paquet de remplacement) (a/21), pour que des emballages tiers contenant des substances de croissance et des graines de semence (plantes) ne s'adaptent pas dans l'ensemble de l'objet.

15. Jardinière selon les revendications 12 à 14,
**caractérisée par le fait**
**que** le paquet supplémentaire (paquet de remplacement) (a/21) est fait de matériaux, qui associés à l'eau, se désagrègent après un certain temps.

16. Jardinière selon les revendications 12 à 15,
**caractérisée par le fait,**
**que** dans le paquet supplémentaire (paquet de remplacement) (a/21), ou que dans le bac de fond (a/1), en direction du fond, est installé un système de drainage, qui assure le transport de l'eau vers les racines lors d'une nouvelle pousse et/ou lors de la première pousse (effet capillaire, principe du buvard).

17. Jardinière selon les revendications 12 à 16,
**caractérisée par le fait,**
**que** le paquet supplémentaire (paquet de remplacement) (a/21) possède un système d'évacuation de l'humidité, semblable au bac de fond (a/1),
**caractérisé par** (a/13), pour éviter la pourriture et la moisissure et/ou la submersion des semences de plantation qui y sont déposées.

18. Jardinière selon l'une des revendications citées plus-haut,
**caractérisée par le fait,**
**que** le bac de fond (a/1) possède des fixations auxquelles le propriétaire d'animaux peut suspendre des pierres pour rongeur, des minéraux etc..

19. Jardinière selon l'une des revendications citées plus-haut,
**caractérisée par le fait,**
**que** le bac de fond (a/1) possède des fixations tout autour du bac, pour
pouvoir y fixer des matériaux en bois, semblables à une palissade en bois, pour que les animaux puissent assouvir leur besoin de ronger.

20. Jardinière selon l'une des revendications citées plus-haut,
**caractérisée par le fait,**
**que** le bac de fond (a/1) et le couvercle de serre (a/3) peuvent être entourés d'un manteau de fils métalliques pour que le bac de fond (a/1) et le couvercle de serre (a/3) ne puissent pas être endommagés par les animaux.
